# EUROPEAN PATENT SPECIFICATION

(11) **EP 3 304 619 B1**
(45) Date of publication and mention of the grant of the patent: **03.04.2019**
(21) Application number: 16840742.7
(22) Date of filing: 19.08.2016
(51) Int. Cl.: H01M 2/20, H01M 2/34

(54) **BATTERY CONNECTOR, BATTERY MODULE AND ELECTRIC VEHICLE**
BATTERIEVERBINDER, BATTERIEMODUL UND ELEKTROFAHRZEUG
CONNECTEUR DE BATTERIE, MODULE DE BATTERIE ET VÉHICULE ÉLECTRIQUE

(30) Priority: 31.08.2015 CN 201510546897; 31.08.2015 CN 201520667220 U
(43) Date of publication of application: 11.04.2018
(73) Proprietor: BYD Company Limited, Shenzhen, Guangdong 518118 (CN)
(72) Inventor: XU, Yunxiang, Shenzhen Guangdong 518118 (CN); ZHENG, Lei, Shenzhen Guangdong 518118 (CN); LIU, Ziyue, Shenzhen Guangdong 518118 (CN); GONG, Xuebin, Shenzhen Guangdong 518118 (CN)
(74) Representative: Hoffmann Eitle
(86) International application number: PCT/CN2016/095964
(87) International publication number: WO 2017/036313

(56) References cited:
- CN-A- 105 428 579
- CN-U- 203 573 900
- CN-U- 204 289 343
- CN-U- 204 558 577
- CN-U- 204 927 400
- CN-Y- 201 134 462
- US-A1- 2011 148 201
- US-A1- 2015 171 413

## Description

### CROSS REFERENCE TO RELATED APPLICATION

This application claims priority to Chinese Patent Application No. 201510546897.2, filed on Aug. 31, 2015 at State Intellectual Property Office, and Chinese Patent Application No. 201520667220.X, filed on Aug. 31, 2015 at State Intellectual Property Office.

### FIELD

The present disclosure relates generally to a vehicle technical field, more particularly to a battery connector, a battery module and an electric vehicle.

### BACKGROUND

An electric vehicle uses a battery module as a power source to supply electricity for operation. In related art, battery modules of the electric vehicle are connected with each other via fuse devices. When the fault of a control circuit occurs, the fuse device could sever the connection between the battery modules timely so as to cut off the power source to avoid accidents. However, there is no any arc extinguishing measure applied to the traditional fuse. When the fuse melts, an electric arc may generate, and the electric arc may breakdown the battery to cause risks of burning and explosion, thus threatening safety of passengers. In addition, since there is no shell to support the fuse, a crack may occur at a weakest portion of the fuse, and then a safety performance and reliability of the battery module may be decreased.

US 2015/171413 A1 is related to the preamble of claim 1, and CN 204289343 U discloses a similar battery connector.

### SUMMARY

Embodiments of the present disclosure seek to solve at least one of the problems existing in the related art to at least some extent.

According to embodiments of a first aspect of the present disclosure, a battery connector for an electric vehicle is provided. The battery connector includes: a connecting sheet having a fusing portion, and a protective component in which the fusing portion is encased. A cross sectional area of the fusing portion is less than a cross sectional area of rest part of the connecting sheet.

Further, the connecting sheet includes a first connecting portion and a second connecting portion, and the fusing portion is disposed between the first connecting portion and the second connecting portion.

In some embodiments of the present disclosure, a width of the fusing portion is less than a width of the first connecting portion and a width of the second connecting portion.

In one embodiment of the present disclosure, in a width direction of the fusing portion, a first side of the fusing portion, a first side of the first connecting portion and a first side of the second connecting portion are located at the same level, and a second side of the fusing portion, a second side of the first connecting portion and a second side of the second connecting portion define a concave portion.

In one embodiment of the present disclosure, the fusing portion has at least one through-hole formed therein.

In one embodiment of the present disclosure, the battery connector further includes a first magnetism member and a second magnetism member respectively disposed at two opposite outer surfaces of the protective component in a thickness direction of the fusing portion, and the fusing portion is disposed between the first magnetism member and the second magnetism member. A polarity of a surface of the first magnetism member facing the fusing portion and a polarity of a surface of the second magnetism member facing the fusing portion are opposite to each other.

In accordance with the invention, the protective component includes a first shell and a second shell, the first shell and the second shell define a sealed protective chamber therebetween, and the fusing portion is disposed in the protective chamber.

In one embodiment of the present disclosure, the first shell and the second shell are connected to each other via snap-fit.

In one embodiment of the present disclosure, the first shell includes a first protrusion and a first slot formed on a first joint surface thereof fitted with the second shell, the second shell includes a second slot and a second protrusion formed on a second joint surface thereof fitted with the first shell, the first slot is fitted the second protrusion, and the first protrusion is fitted with the second slot.

In one embodiment of the present disclosure, the first slot and the first protrusion are disposed at two sides of the first joint surface in a width direction of the first joint surface respectively, the second protrusion and the second slot are disposed at two sides of the second joint surface in a width direction of the second joint surface respectively; and a first relief groove is disposed at each side of the first joint surface in a length direction of the first joint surface, and a second relief groove is disposed at each side of the second joint surface in a length direction of the second joint surface, the first relief groove and the second relief groove are fitted with each other to allow the first connecting portion and the second connecting portion to pass therethrough.

In one embodiment of the present disclosure, the first shell and the second shell are welded together via a brazing layer disposed on at least one thereof, so as to define the protective chamber.

In accordance with the invention, the protective chamber is filled with hydrogen.

In one embodiment of the present disclosure, a gas inlet communicated with the protective chamber is formed in the first shell or the second shell.

In one embodiment of the present disclosure, a duct is inserted in the gas inlet.

In one embodiment of the present disclosure, the first shell and the second shell are made of insulating, anti-flame and high-temperature resistant non-metal materials.

In one embodiment of the present disclosure, the first shell and the second shell are made of ceramic.

In one embodiment of the present disclosure, the first connecting portion, the second connecting portion and the fusing portion are integrally molded.

In one embodiment of the present disclosure, the first connecting portion, the second connecting portion and the fusing portion are made of metal materials.

In one embodiment of the present disclosure, the protective component is connected to parts of the connecting sheet adjacent to two ends of the fusing portion respectively.

In one embodiment of the present disclosure, wherein a surface of the protective component fitted with the connecting sheet is configured as a metalized surface, the metalized surface is fixed to the connecting sheet via welding.

According to embodiments of a second aspect of the present disclosure, a battery module is provided. The battery module includes the battery connector mentioned above.

According to embodiments of a third aspect of the present disclosure, an electric vehicle is provided. The electric vehicle includes a battery connector mentioned above.

With the battery connector according to embodiments of the present disclosure, the fusing portion having the cross sectional area less than that of rest part of the connecting sheet is disposed to the connecting sheet, and the fusing portion is encased in the protective component, such that connection between batteries can be realized, and when a control circuit has a fault, the connection between batteries can be cut off timely, so as to protect the battery. Moreover, an electric arc generated due to the melting of the fusing portion can be extinguished quickly to prevent the battery from being broken down by the electric arc, thus reducing the risks of burning and explosion, and avoiding safety hazards on passengers. In addition, the protective component can act as a supporting member for the fusing portion to improve connection reliability of the fusing portion, so as to increase reliability of the connecting sheet.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 illustrates an explosive view of a battery connector according to an embodiment of the present disclosure;
Fig. 2 illustrates a partially enlarged view of part A in Fig. 1;
Fig. 3 illustrates a schematic view of a connecting sheet of a battery connector according to an embodiment of the present disclosure, in which the connecting sheet is unfolded; and
Fig. 4 illustrates a perspective view of a battery connector according to an embodiment of the present disclosure.

Like reference numerals refer to corresponding parts throughout the drawings.

### DETAILED DESCRIPTION

Reference will now be made in detail to various implementations, examples of which are illustrated in the accompanying drawings. In the following detailed description, numerous specific details are set forth in order to provide a thorough understanding of the present disclosure and the described implementations herein. However, implementations described herein may be practiced without these specific details. In other instances, well-known methods, procedures, components, and mechanical apparatus have not been described in detail so as not to unnecessarily obscure aspects of the implementations.

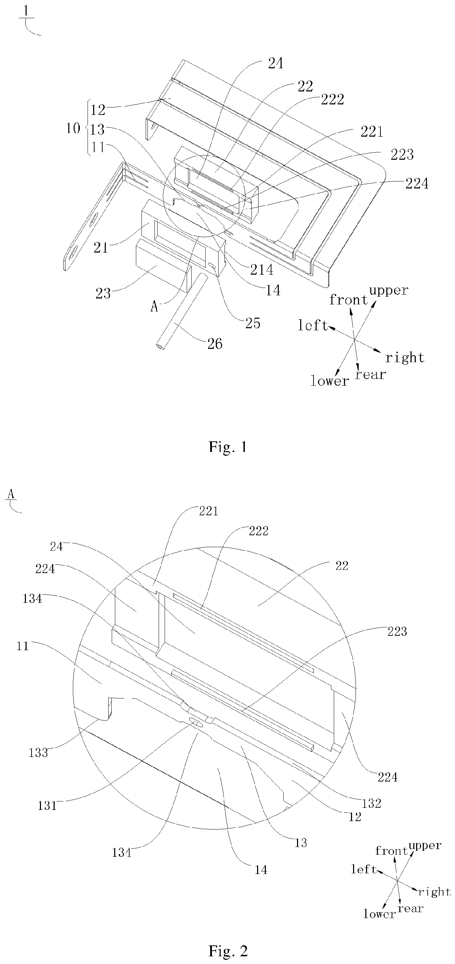

A battery connector 1 for an electric vehicle according to embodiments of the present disclosure will be described with reference to Figs. 1-4.

As shown in Figs 1-4, the battery connector 1 according to embodiments of the present disclosure includes a connecting sheet 10 and a protective component 20. The connecting sheet 10 is configured to connect two adjacent batteries.

Specifically, the connecting sheet 10 has a fusing portion 13, and a cross sectional area of the fusing portion 13 is less than a cross sectional area of rest part of the connecting sheet 10. When an overcurrent or short circuit current passes through the fusing portion 13, the fusing portion 13 itself generates heat and melts, such that the connecting sheet 10 will be disconnected to protect the battery. When a fault occurs to a control circuit, the fusing portion would melt so as to disconnect two adjacent batteries.

A cross section of the fusing portion 13 is obtained by cutting the fusing portion 13 along a width direction of the fusing portion 13. Specifically, a front-rear direction shown in Fig. 1 is the width direction of the fusing portion 13. The rest part of the connecting sheet 100 means others part of the connecting sheet 10 other than the fusing portion 13. In some embodiments, the connecting sheet 10 includes a first connecting portion 11 and a second connecting portion 12, and the rest part of the connecting sheet refers to the first connecting portion 11 and the second connecting portion 12.

The fusing portion 13 is encased in the protective component 20. Then, an electric arc generated during melting of the fusing portion 13 would be limited within the protective component 20, and the electric arc would be extinguished quickly, so as to avoid destroying other portions of the connecting sheet 10, therefore preventing breakdown of the battery and avoiding an explosion of the battery. It should be noted that, "the fusing portion 13 is encased in the protective component 20" may be that an inner surface of the protective component 20 and a surface of the fusing portion 13 are closely fitted with each other, or that the inner surface of the protective component 20 defines a protective chamber 24 and the fusing portion 13 is disposed within the protective chamber 24.

During operation of an electric vehicle, the battery connector 1 may be continuously shaking, and since the cross sectional area of the fusing portion 13 is less than the cross sectional area of the rest part of the connecting sheet 10, the fusing portion 13 may be easily broken due to the continuously shaking, as compared with the rest part of the connecting sheet 10. In some embodiments, the protective component 20 is connected to parts of the connecting sheet 10 adjacent to two ends of the fusing portion 13, and thus the protective component 20 may act as a supporting casing for the fusing portion 13 to increase a connection reliability of the fusing portion 13, thus improving a reliability of the connecting sheet 10.

With the battery connector 1 according to embodiments of the present disclosure, the fusing portion 13 having the cross sectional area less than that of the rest part of the connecting sheet 10 is disposed to the connecting sheet 10, and the fusing portion 13 is encased in the protective component 20, such that connection between batteries can be realized, and when a fault occurs to the control circuit, the connection between batteries can be cut off timely, so as to protect the battery. Moreover, the electric arc generated due to the melting of the fusing portion 13 can be extinguished quickly to avoid breaking down the battery, thus decreasing the risks of burning and explosion, and reducing safety hazards on passengers. In addition, the protective component 20 can improve a connection reliability of the fusing portion 13 and prevent the fusing portion 13 from being broken due to the shaking of the battery connector 1.

In one embodiment of the present disclosure, as shown in Figs. 1-3, the connecting sheet 10 includes a first connecting portion 11 and a second connecting portion 12, and the fusing portion 13 is disposed between the first connecting portion 11 and the second connecting portion 12. Thus, when a fault occurs to the control circuit, the fusing portion 13 melts to disconnect the connecting sheet 10 so as to disconnect two adjacent batteries, thus avoiding destroying the batteries. For example, as shown in Figs. 1-3, a first end of the fusing portion 13 is connected with the first connecting portion 11, and a second end of the fusing portion 13 is connected with the second connecting portion 12, such that when the fusing portion 3 melts, the first connecting portion 11 and the second connecting portion 12 are disconnected from each other, thus efficiently avoiding destroying the batteries.

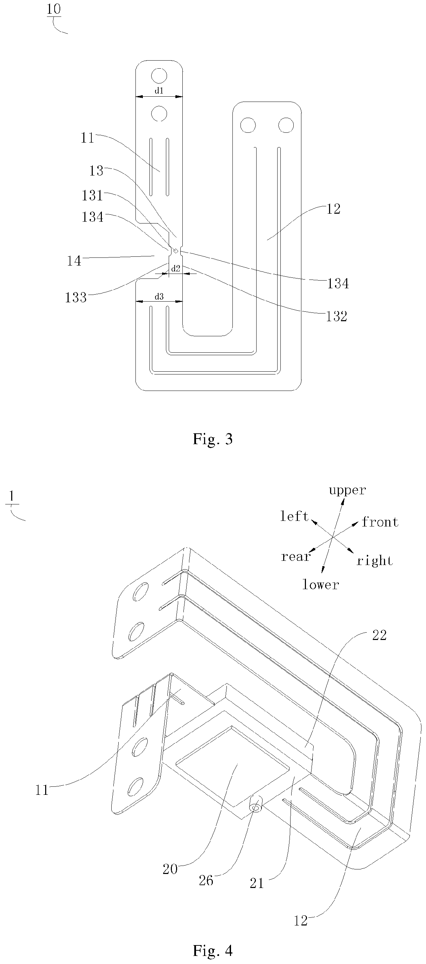

In one embodiment, as shown in Fig. 2 and Fig. 3, a width of the fusing portion 13 is less than a width of the first connecting portion 11 and the second connecting portion 12. In other words, the width of the fusing portion 13 is less than that of the first connecting portion 11, and the width of the fusing portion 13 is also less than that of the second connecting portion 12. Then, the fusing portion 13 is configured as the weakest portion of the connecting sheet 10, and the fusing portion 13 may most easily melt in terms of the whole connecting sheet 10. Therefore, an electric arc generated during melting the connecting sheet 10 may be limited at the fusing portion 13, which facilitates protective measures for the fusing portion 13 to prevent other portions of the connecting sheet 10 from being destroyed by the electric arc, and to avoid the battery explosion due to the breakdown of the battery. For example, as shown in Fig. 3, the first connecting portion 11 has a width of d1, the fusing portion 13 has a width of d2, and the second connecting portion 12 has a width of d3, d2 is less than d1, and d2 is less than d3.

In some embodiments of the present disclosure, in a width direction of the fusing portion 13 (the front-rear direction shown in Fig. 1), a first side of the fusing portion 13, a first side of the first connecting portion 11 and a first side of the second connecting portion 12 are located at a same level, and also, a second side of the fusing portion 13, a second side of the first connecting portion 11 and a second side of the second connecting portion 12 define a concave portion 14 therebetween. Thus, the electric arc generated during the melting of the fusing portion 13 may be introduced into the concave portion 14 under an external force, such that the electric arc may be lengthened to reduce power thereof. Moreover, since there is no connecting sheet 10 in the concave portion 14, the electric arc cannot keep burning, and then the electric arc is extinguished quickly, thus reducing potential safety hazards on the vehicle and passengers.

For example, as shown in Figs. 1-3, in the front-rear direction (the front-rear direction shown in Figs. 1 and 2), the width of the fusing portion 13 is less than the width of the first connecting portion 11 and the width of the second connecting portion 12, a front side wall of the fusing portion 13, a front side wall of the first connecting portion 11 and a front side wall of the second connecting portion 12 are at the same level, and also, a rear side wall of the fusing portion 13, a rear side wall of the first connecting portion 11 and a rear side wall of the second connecting portion 12 define the concave portion 14 therebetween. Thus, the electric arc generated during the melting may be guided to the concave portion 14 under an external force, such that the electric arc is lengthened to reduce the power thereof.

In one embodiment, as shown in Figs. 1-3, the fusing portion 13 has at least one through-hole 131 formed thereon. Then the electric arc generated during melting would be divided into several smaller electric arcs, thus power of the electric arc would be reduced, and the electric arc could be extinguished quickly.

In one embodiment of the present disclosure, the fusing portion 13 has at least one through-hole 131, such that the electric arc generated during the melting can be divided into several small electric arcs, and thus the power of the electric arc is reduced, which facilitates quick extinguishing of the electric arc. In one embodiment of the present disclosure, as shown in Figs. 1-3, the fusing portion 13 has at least one groove 134 formed therein. Then, not only the electric arc generated during the melting can be divided into several small electric arcs, but also can the width of the fusing portion 13 be further decreased, so as to make sure that the fusing portion 13 can melt when the control circuit has a fault. Thus, reliability and safety of the battery connector can be further improved.

For example, as shown in Fig. 3, the fusing portion 13 includes one through-hole 131 and two grooves 134 formed therein, the through-hole 131 is formed in a center portion of the fusing portion 13, and the two grooves 134 are symmetrically provided at two sides of the through-hole 131 in the width direction of the fusing portion 13. An opening of one groove 134 faces away from the concave portion 14, and an opening of the other groove 134 faces the concave portion 14. Thus, not only the electric arc generated during the melting can be divided into several small electric arcs, but also can the width of the fusing portion 13 be further decreased, so as to make sure that the fusing portion 13 can melt when the control circuit has a fault. Thus, the reliability and safety of the battery connector 1 can be further improved.

In some embodiments, as shown in Fig. 1, in a thickness direction of the fusing portion 13, namely an upper-lower direction shown in Fig. 1, a first magnetism member 23 and a second magnetism member (not shown) are disposed at two opposite outer surfaces of the protective component 20 respectively, and the fusing portion 13 is disposed between the first magnetism member 23 and the second magnetism member. A polarity of a surface of the first magnetism member 23 facing the fusing portion 13 and a polarity of a surface of the second magnetism member facing the fusing portion 13 are opposite to each other. In some embodiments of the present disclosure, a direction of a magnetic field between the first magnetism member 23 and the second magnetism member, a current direction in the fusing portion and an opening direction of the concave portion 14 comply with left hand rule. When a current passes through the fusing portion 13, the fusing portion 13 bears a force within the magnet filed between the first magnetism member 23 and the second magnetism member, and the electric arc generated during the melting of the fusing portion 13 can be pulled into the concave portion 14 under the force, such that the electric arc can be lengthened and kept away from the connecting sheet 10. Therefore, the electric arc can be extinguished quickly. It should be noted that, since the electric arc occurs on the fusing portion 13, the electric arc is pulled toward the opening of the concave portion 14 from the fusing portion 13.

For example, as shown in Fig. 1, the first magnetism member 23 is disposed at a lower surface of the protective component 20, and the second magnetism member is disposed at an upper surface of the protective component. Both an upper end of the first magnetism member 23 (an end surface of the first magnetism member 23 facing the connecting sheet 10, as shown in Fig. 1) and an upper end of the second magnetism member (an end surface of the second magnetism member 23 facing away from the connecting sheet 10, as shown in Fig. 1) are N poles, and both a lower end of the first magnetism member 23 and a lower end of the second magnetism member are S poles. Furthermore, the opening of the concave portion 14 is orientated backwards. According to left hand rule (left hand rule means that: unfolding your left hand and keeping your thumb vertical to other four fingers, if a magnetic line of force is directed to and vertical to your palm, and your other four fingers point to the direction of the current, then the direction your thumb pointing to represents the direction of a force applied to a current-carrying conductor in the magnetic field), palm faces downward, thumb points to an opening direction of the concave portion 14, and then the other four fingers points to left, that is, the direction of the current passing through the fusing portion 13 points to left (i.e., left shown in Fig. 1).

In another example, directions of mounting the first magnetism member 23 and the second magnetism member are the same as stated above, that is, both of upper ends of the first magnetism member 23 and the second magnetism member are N poles, and both of lower ends of the first magnetism member 23 and the second magnetism member are S poles. If the direction of current passing through the fusing portion 13 points to right (i.e., right as shown in Fig. 1), according to left hand rule, the opening direction of the concave portion 14 points to front, i.e., the opening of the concave portion 14 is orientated frontwards.

In some other embodiments of the present disclosure, both of upper ends of the first magnetism member 23 and the second magnetism member are S poles, and both of lower ends of the first magnetism member 23 and the second magnetism member are N poles. As shown in Fig. 1, the opening direction of the concave portion 14 points to rear, and then, according to left hand rule (unfolding your left hand and keeping your thumb vertical to other four fingers, if a magnetic line of force is directed to and vertical to your palm, and your other four fingers point to the direction of the current, then the direction your thumb pointing to represents the direction of a force applied to a current-carrying conductor in the magnetic field), palm faces upwards, and thumb points to the opening direction of the concave portion 14, and then the other four fingers point to the right, that is, the direction of the current in the fusing portion 13 points to the right (i.e., right shown in Fig. 1).

An installation direction of the battery connector 1 is related to a polarity relationship (i.e., N-S directions) of the first magnetism member 23 and the second magnetism member 23, and also to the opening direction of the concave portion 14. It should be noted that there is no particular limitation to the mounting positions of the first magnetism member 23 and the second magnetism member 23, the polarity relationship (i.e., the N-S directions) of the first magnetism member 23 and the second magnetism member 23, the current direction and the opening direction of the concave portion 14, as long as the electric arc generated during the melting of the fusing portion 13 can be pulled toward the concave portion 14 under the force applied to the electric arc in the magnetic field according to left hand rule.

In one embodiment of the present disclosure, as shown in Fig. 1, the protective component 20 includes a first shell 21 and a second shell 22. The first shell 21 and the second shell 22 define a sealed protective chamber 24 therebetween, and the fusing portion 13 is disposed in the protective chamber 24. Thus, the fusing portion 13 is isolated within the protective chamber 24 so as to prevent other portions of the connecting sheet 10 from being destroyed by the electric arc generated during the melting of the fusing portion 13, thus improving the safety and reliability of the battery connector 1.

In some embodiments, the first shell 21 and the second shell 22 are connected via snap-fit. Specifically, the first shell 21 includes a protrusion and/or a slot formed on a first joint surface thereof fitted with the second shell 22, the second shell 22 includes a slot and/or a protrusion formed on a second joint surface thereof fitted with the first shell 21, and the slot and/or the protrusion formed on the second joint surface of the second shell 22 is or are fitted with the protrusion and/or the slot formed on the first joint surface of the first shell 21.

For example, the first shell 21 includes at least one protrusion formed on the first joint surface thereof, the second shell 22 includes at least one slot formed on the second joint surface thereof, and the at least one protrusion is fitted with the at least one slot. For another example, the first shell 21 includes at least one slot formed on the first joint surface thereof, the second shell 22 includes at least one protrusion formed on the second joint surface thereof, and the at least one slot is fitted with the at least one protrusion. In some other examples, the first shell 21 includes at least one protrusion and at least one slot formed on the first joint surface thereof, the second shell 22 includes at least one slot and at least one protrusion formed on the second joint surface thereof, and the at least one protrusion on the first joint surface is fitted with the at least one slot on the second joint surface, and the at least one slot on the first joint surface is fitted with the at least one protrusion on the second joint surface.

In some embodiments of the present disclosure, as shown in Fig. 1, the first shell 21 includes a first protrusion (not shown) and a first slot (not shown) formed on a first joint surface (not shown) thereof fitted with the second shell 22, the second shell 22 includes a second slot 222 and a second protrusion 223 formed on a second joint surface 221 thereof fitted with the first shell 21, the first slot is fitted with the second protrusion 223, and the first protrusion is fitted with the second slot 222. Thus, the first protrusion may be fitted into the second slot 222, and the second protrusion 223 may be fitted into the first slot, such that the first shell 21 and the second shell 22 can be connected with each other more tightly. Therefore, the electric arc generated during the melting can be further isolated to prevent the electric arc from stretching out of the protective chamber 24 defined by the first shell and the second shell, so as not to burn the connecting sheet, break down the battery, and even cause safety hazards to the vehicle and passengers.

In some embodiments, as shown in Fig. 1 and Fig. 2, the first slot and the first protrusion are disposed at two sides of the first joint surface in a width direction of the first joint surface (i.e., the front-rear direction shown in Fig.1) respectively, and the second protrusion 223 and the second slot 222 are disposed at two sides of the second joint surface 221 in a width direction of the second joint surface 221 (i.e., the front-rear direction shown in Fig. 1) respectively. Thus, the first joint surface and the second joint surface 221 can be directly connected with each other, without interfering with the connecting sheet. As shown in Fig. 1 and Fig. 2, a first relief groove 214 is disposed at each side of the first joint surface in a length direction of the first joint surface (i.e., the left-right direction shown in Fig. 1) respectively, a second relief groove 224 is disposed at each side of the second joint surface 221 in a length direction of the second joint surface (i.e., the left-right direction shown in Fig. 1) respectively, and the first relief groove 214 and the second relief groove 224 are fitted with each other to allow the first connecting portion 11 and the second connecting portion 12 to pass therethrough. Thus, during an assembling process, the first joint surface and the second joint surface 221 can be closely fitted with the connecting sheet 10, without interfering with the first connecting sheet 11 and the second connecting sheet 12. As shown in Fig. 1, in the left-right direction, the first relief groove 214 and the second relief groove 224 are disposed at left and right sides of the first joint surface respectively, and also respectively at left and right sides of the second joint surface 221.

In some other embodiments of the present disclosure, the first shell 21 and the second shell 22 are welded together. Specifically, a brazing layer (not shown) is disposed between the joint surfaces of the first shell 21 and the second shell 22, and the first shell 21 and the second shell 22 are welded together via the brazing layer so as to define the protective chamber 24. Thus, a sealed protective chamber 24 is formed, and the electric arc generated during the melting of the fusing portion 13 can be isolated from outside air so as to effectively increase an extinguishing speed of the electric arc. It should be noted that, the brazing layer is disposed on at least one of the joint surfaces of the first shell 21 and the second shell 22, and the brazing layer may be melt in a brazing furnace. Under a high temperature, the brazing layers on the first joint surface and the second joint surface 221 are melt, such that the first joint surface and the second joint surface 221 are welded together, and thus the fusing portion 13 is sealed in the protective chamber 24.

In some embodiments of the present disclosure, the protective chamber 24 is filled with hydrogen. Hydrogen not only can take away plenty of heat and decrease a temperature in an arc zone, but also can blow away ionized gas to fill the protective chamber 24 with fresh high-pressure gas, such that an extinguishing speed of the electric arc is increased and an extinguishing effect thereof is improved. In some embodiments, as shown in Fig. 1, a gas inlet 25 communicated with the protective chamber 24 is formed in the first shell 21 or the second shell 22 for filling hydrogen, so as to increase the extinguishing speed. In one embodiment, a duct 26 is inserted in the gas inlet 25 to benefit the filling of hydrogen.

In some embodiments of the present disclosure, the first shell 21 and the second shell 22 are made of insulating, anti-flame and high-temperature resistant non-metal materials. Thus, the fusing portion 13 can be isolated from other portions of the connecting sheet 10 to avoid destroying the other portions of the connecting sheet 10 when the electric arc generated during the melting of the fusing portion 13 is extinguished. In one embodiment, the first shell 21 and the second shell 22 are made of ceramic. Ceramic material has rich sources and a low cost, and the ceramic process is mature, such that the cost can be reduced and the production cycle can be shortened.

In some embodiments, the first connecting portion 11, the second connecting portion 12 and the fusing portion 13 are integrally molded. Thus, s structure of the battery connector 1 can be simplified, the production cycle can be shortened, and the cost can be reduced. It should be noted that, there are no particular limitations to the manufacturing method of integrally molding the first connecting portion 11, the second connecting portion 12 and the fusing portion 13. For example, the first connecting portion 11, the second connecting portion 12 and the fusing portion 13 may be integrally molded via impact molding. In some embodiments, the first connecting portion 11, the second connecting portion 12 and the fusing portion 13 are made of metal materials. The metal material has a good conductivity performance, which may be beneficial for the connection between batteries. It should be noted that, there is no particular limitation to the metal materials of the first connecting portion 11, the second connecting portion 12 and the fusing portion 13. For example, the metal material may be copper, silver, tin, or alloys thereof.

In some embodiments of the present disclosure, the protective component 20 is connected to parts of the connecting sheet 10 adjacent to two ends of the fusing portion 13. Thus, the whole fusing portion 13 may be disposed within the protective component 20, such that the other portions of the connecting sheet 10 can be prevented from being destroyed by the electric arc generated during the melting of the fusing portion 13, and the connecting sheet 10 can be protected well. It should be noted that, during operation of the electric vehicle, for example, when the electric vehicle runs on a road, the battery connector 1 may be continuously shaking, and since the cross sectional area of the fusing portion 13 is less than the cross sectional areas of the other parts of the connecting sheet 10, the fusing portion 13 may be more easily broken due to continuously shaking, as compared with the other portions of the connecting sheet 10. In some embodiments, the protective component 20 is connected to the parts of the connecting sheet 10 adjacent to two ends of the fusing portion 13, and thus the protective component 20 can act as a supporting housing for the fusing portion 13 to increase a connection reliability of the fusing portion 13, so as to improve a reliability of the connecting sheet 10.

In some embodiments, a surface of the protective component 20 fitted with the connecting sheet 10 is configured as a metalized surface, and the metalized surface is fixed to the connecting sheet 10 via welding. It should be noted that the protective component 20 and the connecting sheet 10 are closely fitted with each other, and under a high temperature, the metal on surfaces of the protective component 20 and the connecting sheet 10 begins to melt, and after being cooled down, the surfaces of the protective component 20 and the connecting sheet 10 are welded together, i.e., the protective component 20 and the connecting sheet 10 are welded together. Thus, the other portions of the connecting sheet 10 can be prevented from being destroyed by the electric arc generated during the melting of the fusing portion 13, and the protective component 20 can act as the supporting member for the fusing portion 13 to increase the connection reliability of the fusing portion 13, so as to improve the reliability and safety of the connecting sheet 10.

According to embodiments of the present disclosure, the battery connector 1 for an electric vehicle includes a connecting sheet 10 and a protective component 20.

Specifically, the connecting sheet 10 has a fusing portion 13, and a cross sectional area of the fusing portion 13 is less than a cross sectional area of rest part of the connecting sheet 10. When an overcurrent or short circuit current passes through the fusing portion 13, the fusing portion 13 will generate heat and begin to melt, such that the connecting sheet will be disconnected to protect batteries. Therefore, when a control circuit has a fault, the fusing portion 13 may melt so as to disconnect two batteries.

The protective component 20 includes a first shell 21 and a second shell 22, the first shell 21 and the second shell 22 define a sealed protective chamber 24 therebetween, and the fusing portion 13 is disposed in the protective chamber 24. A surface of the protective component 20 matched with connecting sheet 10 is configured as a metalized surface, i.e., joint surfaces of the first shell 21 and the second shell 22 are configured as metalized surfaces, and the metalized surfaces of the first shell 21 and the second shell 22 are respectively welded to parts of the connecting sheet 10 adjacent to two ends of the fusing portion 13. Then, other portions of the connecting sheet 10 can be prevented from being destroyed by the electric arc generated during the melting of the fusing portion 13, and the protective component 20 can act as a supporting housing for the fusing portion 13 to increase a connection reliability of the fusing portion 13, so as to improve reliability and safety of the connecting sheet 10.

For example, a surface of the first shell 21 facing and connected to the second shell 22, and a surface of the second shell 22 facing and connected to the first shell 21 are joint surfaces. These joint surfaces are configured as metalized surfaces. The connecting sheet 10 includes a first connecting portion 11 and a second connecting portion 12, and the fusing portion 13 is disposed between the first connecting portion 11 and the second connecting portion 12. An end of the first connecting portion 11 connected to the fusing portion 13 is welded to the metalized surfaces of the first shell 21 and the second shell 22 respectively, and an end of the second connecting portion 12 connected to the fusing portion 13 is also welded to the metalized surfaces of the first shell 21 and the second shell 22 respectively. Furthermore, the first shell 21 and the second shell 22 may be welded together through the metalized surfaces thereof. Thus, the other portions of the connecting sheet 10 can be prevented from being destroyed by the electric arc generated during the melting of the fusing portion 13 to increase the connection reliability of the fusing portion 13, so as to improve the reliability and safety of the connecting sheet 10.

With the battery connector 1 according to embodiments of the present disclosure, the fusing portion 13 having the cross sectional area less than that of the rest part of the connecting sheet 10 is disposed to the connecting sheet 10, and the fusing portion 13 is encased in the protective component 20, specifically in the protective chamber 24 defined by the first shell 21 and the second shell 22, such that connection between batteries can be realized, and when the control circuit has a fault, the connection between batteries can be cut off timely, so as to protect the batteries. Moreover, the electric arc generated due to the melting can be extinguished quickly to prevent the battery from being broken-down by the electric arc, thus reducing the risks of burning and explosion, and avoiding safety hazards on passengers.

In addition, the joint surfaces of the first shell 21 and the second shell 22 are metalized, and the metalized surfaces of the first shell 21 and the second shell 22 are fixed to the parts of the connecting sheet 10 adjacent to the fusing portion 13 via welding. Thus, the protective component 20 can act as the supporting housing for the fusing portion 13 to increase the connection reliability of the fusing portion 13, so as to improve the reliability of the connecting sheet 10.

The battery connector 1 according to embodiments of the present disclosure will be described with reference to Figs. 1-4. It should be noted that the description below only shows some explanatory embodiments, but cannot be construed to limit the present disclosure.

As shown in Fig. 1 and Fig. 4, the battery connector 1 includes a connecting sheet 10 and a protective component 20. The connecting sheet 10 includes a first connecting portion 11, a second connecting portion 12 and a fusing portion 13, and the fusing portion 13 is disposed between the first connecting portion 11 and the second connecting portion 12. The fusing portion 13 is configured to have a plate shape, and in a front-rear direction (shown in Fig. 1), a width of the fusing portion 13 is less than those of the first connecting portion 11 and the second connecting portion 12. Thus, the fusing portion 13 is configured as the weakest portion of the connecting sheet 10, that is, the fusing portion 13 may most easily melt in terms of the whole connecting sheet 10. When an abnormal condition of a control circuit occurs, the connecting sheet 10 may be cut off at the fusing portion 13 (by melting the fusing portion 13), so as to disconnect the first connecting portion 11 and the second connecting portion 12.

As shown in Figs. 2 and 3, a front side wall 132 of the fusing portion 13, a front side wall of the first connecting portion 11 and a front side wall of the second connecting portion 12 are flush with one another. And, a rear side wall 133 of the fusing portion 13, a rear side wall of the first connecting portion 11 and a rear side wall of the second connecting portion 12 define a concave portion 14 therebetween. Thus, an electric arc generated during the melting may be guided to the concave portion 14 under an external force, that is, the electric arc is lengthened to reduce power thereof. Moreover, there is no connecting sheet 10 in the concave portion 14, and thus the electric arc cannot keep burning, such that the electric arc can be extinguished quickly to avoid safety hazards on the vehicle and passengers.

In addition, the fusing portion 13 has a through-hole 131 formed therein, such that the electric arc generated during the melting may be divided into several smaller electric arcs, the power of the electric arc can be reduced, and thus the electric arc can be extinguished quickly. The fusing portion 13 further includes two grooves 134 formed therein, and the two grooves 134 are symmetrically formed at two sides of the through-hole 131. An opening of one groove 134 faces away from the concave portion 14, and an opening of the other groove 134 faces the concave portion 14. Thus, not only the electric arc generated during the melting can be divided into several small electric arcs, but also can the width of the fusing portion 13 be further decreased, so as to make sure that the fusing portion 13 can melt when the control circuit has a fault. Thus, the reliability and safety of the battery connector 1 may be further improved.

As shown in Fig. 1 and Fig. 4, the protective component 20 includes a first shell 21 and a second shell 22. The first shell 21 and the second shell 22 define a sealed protective chamber 24 therebetween, and the fusing portion 13 is disposed in the protective chamber 24. Thus, the fusing portion 13 is isolated within the protective chamber 24 so as to improve safety and reliability of the battery connector 1. A first magnetism member 23 and a second magnetism member are disposed at an outside surface of the first shell 21 and an outside surface of the second shell 22 respectively. The first magnetism member 23 is disposed at a lower surface of the first shell 21, and the second magnetism member is disposed at an upper surface of the second shell 22.

Both an upper end of the first magnetism member 23 (an end surface of the first magnetism member 23 facing the connecting sheet 10 as shown in Fig. 1) and an upper end of the second magnetism member (an end surface of the second magnetism member 23 facing away from the connecting sheet 10 as shown in Fig. 1) are N poles, and both a lower end of the first magnetism member 23 and a lower end of the second magnetism member are S poles. An opening direction of the concave portion 14 points to rear (i.e., the rear shown in Fig. 1) and a current direction points to left. Thus, the electric arc generated during the melting may be guided to the concave portion 14 under a magnetic field force, that is, the electric arc is lengthened to reduce the power thereof. Moreover, since there is no connecting sheet 10 in the concave portion 14, the electric arc cannot keep burning, and thus the electric arc can be extinguished quickly so as to avoid safety hazards on the vehicle and passengers.

In addition, as shown in Fig. 1 and Fig. 2, the first shell 21 and the second shell 22 are connected via snap-fit. Specifically, a first protrusion and a first slot are formed on the first joint surface of the first shell 21 fitted with the second shell 22. The first slot and the first protrusion are disposed at two sides of the first joint surface in the front-rear direction. A second protrusion 223 and a second slot 222 are formed on the second joint surface 221 of the second shell 21 fitted with the first shell 21. The second slot 222 and the second protrusion 223 are disposed at two sides of the second joint surface 221 in the front-rear direction. The second protrusion 223 is suitable to insert into the first slot and be fitted therein, and the first protrusion is suitable to insert into the second slot 222 and be fitted therein. Thus, the first shell 21 and the second shell 22 can be connected with each other more closely to further isolate the electric arc generated during the melting.

In addition, in the left-right direction as shown in Fig. 1, a first relief groove 214 is disposed at each side (i.e., each of left and right sides) of the first joint surface to allow the first connecting portion 11 and the second connecting portion 12 to pass therethrough, and a second relief groove 214 is disposed at each side (i.e., each of left and right sides) of the second joint surface 221 to allow the first connecting portion 11 and the second connecting portion 12 to pass therethrough. Thus, during an assembling process, the first joint surface and the second joint surface 221 can be closely fitted with the first connecting portion 11 and the second connecting portion respectively, without interfering with the first connecting portion 11 and the second connecting portion 12.

It should be noted that, a surface of the first shell 21 facing and connected to the second shell 22 is the first joint surface, and a surface of the second shell 22 facing and connected to the first shell 21 is the second joint surface 221.

In addition, the first shell 21 and the second shell 22 are made of insulating, anti-flame and high-temperature resistant non-metal materials, and at least part of the first joint surface and at least part of the second joint surface 221 (for example, end parts of the first and second joint surfaces) are metalized. For example, a brazing layer is disposed on at least one of the at least part of the first joint surface and the at least part of the second joint surface 221. The first connecting portion 11, the second connecting portion 12 and the fusing portion 13 may be integrally molded via impact molding, and the first connecting portion 11, the second connecting portion 12 and the fusing portion 13 are made of metal materials, such as copper, tin.

An end part of the first connecting portion 11 connected to the fusing portion 13 is fitted and welded with the first joint surface of the first shell 21 and the second joint surface of the second shell 22 respectively, and an end part of the second connecting portion 12 connected to the fusing portion 13 is fitted and welded with the first joint surface of the first shell 21 and the second joint surface of the second shell 22 respectively. Under a high temperature, metal on the metalized surface begins to melt, then the first connecting portion 11 is welded to the first joint surface and the second joint surface respectively, and the second connecting portion 12 is welded to the first joint surface and the second joint surface respectively. Therefore, the fusing portion 13 can be limited within the sealed protective chamber 24 defined by the first shell 21 and the second shell 22. Thus, the electric arc generated during the melting can be isolated in the protective chamber to prevent other portions of the connecting sheet 10 from being destroyed by the electric arc. And, the protective component 20 can act as a supporting housing for the fusing portion 13 to improve the connection reliability of the fusing portion 13, so as to increase the reliability of the connecting sheet 10, thus preventing the fusing portion 13 from being broken due to the frequent shaking during operation of the electric vehicle.

In some other embodiments of the present disclosure, the whole first joint surface and the whole second joint surface 221 are metalized, such that the first joint surface of the first shell 21 and the second joint surface 221 of the second shell 22 can be fitted and welded with each other.

That is, the first shell 21 and the second shell 22 are connected to each other via welding. In such case, under a high temperature, metal of the metalized surface begins to melt, then the first connecting portion 11 is welded to the first joint surface and the second joint surface respectively, the second connecting portion 12 is welded to the first joint surface and the second joint surface respectively, and at the same time, the first joint surface is welded to the second joint surface. Therefore, the fusing portion 13 can be limited within the sealed protective chamber 24 defined by the first shell 21 and the second shell 22.

The protective chamber 24 is filled with hydrogen. Hydrogen not only can take away plenty of heat and decrease a temperature in an arc zone, but also can blow away ionized gas to fill the protective chamber 24 with fresh high-pressure gas, thus increasing an extinguishing speed of the electric arc and improving an extinguishing effect thereof. A gas inlet 25 is formed in the first shell 21 and a duct 26 is inserted in the gas inlet 25 to fill hydrogen into the protective chamber 24. When the protective chamber 24 is full of hydrogen, the duct 26 is cut off, compacted and sealed.

A battery module (not shown) according to embodiments of the present disclosure will be descripted with reference to Figs. 1-4. The battery module according to embodiments of the present disclosure includes a battery connector 1 mentioned above. Thus, when an abnormal condition of a control circuit occurs, the circuit can be cut off timely, and an electric arc generated during melting the fusing portion 13 can be isolated to prevent the battery from being broken-down, thus reducing risks of burning and explosion.

With the battery module according to the present disclosure, a fusing portion 13 having a cross sectional area less than that of rest part of the connecting sheet 10 is disposed to the connecting sheet 10, and the fusing portion 13 is encased in a protective component 20, such that connection between batteries can be realized, and when the control circuit has a fault, the connection between batteries can be cut off timely, so as to protect the battery. Moreover, an electric arc generated due to the melting can be extinguished quickly to prevent the battery from being broken down by the electric arc, thus reducing the risks of burning and explosion, and avoiding safety hazards on passengers. In addition, the protective component 20 can act as a supporting housing for the fusing portion 13 to improve the connection reliability of the fusing portion 13, so as to increase the reliability of the connecting sheet 10.

An electric vehicle (not shown) according to embodiments of the present disclosure will be descripted with reference to Figs. 1-4. The electric vehicle according to embodiments of the present disclosure includes a battery connector 1 mentioned above. Thus, when an abnormal condition of a control circuit of the electric vehicle occurs, the circuit can be cut off timely, so as to protect the electric vehicle and passengers.

With the electric vehicle according to embodiments of the present disclosure, a fusing portion 13 having a cross sectional area less than that of rest part of the connecting sheet 10 is disposed to the connecting sheet 10, and the fusing portion 13 is encased in a protective component 20, such that connection between batteries can be realized, and when the control circuit has a fault, the connection between batteries can be cut off timely, so as to protect the battery. Moreover, an electric arc generated due to the melting can be extinguished quickly to prevent the battery from being broken down by the electric arc, thus reducing the risks of burning and explosion, and avoiding safety hazards on passengers. In addition, the protective component 20 can act as a supporting housing for the fusing portion 13 to improve the connection reliability of the fusing portion 13, so as to increase the reliability of the connecting sheet 10.

It will be understood that, in the present disclosure, the term such as "length," "width," "thickness," "upper," "lower," "front," "rear," "left," "right," "vertical," "inner," and "outer" should be construed to refer to the orientation as then described or as shown in the drawings under discussion. These relative terms are for convenience of description and do not require that the present disclosure be constructed or operated in a particular orientation.

In addition, terms such as "first" and "second" are used herein for purposes of description and are not intended to indicate or imply relative importance or significance or to imply the number of indicated technical features. Thus, the feature defined with "first" and "second" may comprise one or more of this feature.

In the present disclosure, unless specified or limited otherwise, the terms "mounted," "connected," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

The foregoing description, for purposes of explanation, has been described with reference to specific embodiments. However, the illustrative discussions above are not intended to be exhaustive or to limit the disclosure to the precise forms disclosed. Many modifications and variations are possible in view of the above teachings. The embodiments were chosen and described in order to best explain the principles of the disclosure and its practical applications, to thereby enable others skilled in the art to best utilize the disclosure and various embodiments with various modifications as are suited to the particular use contemplated.

## Claims

1. A battery connector (1) for an electric vehicle, comprising:
a connecting sheet (10) having a fusing portion (13); and
a protective component (20) in which the fusing portion (13) is encased,
wherein a cross sectional area of the fusing portion (13) is less than a cross sectional area of rest part of the connecting sheet (10),
wherein the connecting sheet (10) comprises a first connecting portion (11) and a second connecting portion (12), and the fusing portion (13) is disposed between the first connecting portion (11) and the second connecting portion (12),
wherein the protective component (20) includes a first shell (21) and a second shell (22), the first shell (21) and the second shell (22) define a sealed protective chamber (24) therebetween, and the fusing portion (13) is disposed in the protective chamber (24), wherein the first shell (21) and the second shell (22) are preferably connected to each other via snap-fit,
**characterized in that** the protective chamber (24) is filled with hydrogen.

2. The battery connector (1) of claim 1, wherein a width of the fusing portion (13) is less than a width of the first connecting portion (11) and a width of the second connecting portion (12).

3. The battery connector (1) of claim 2, wherein in a width direction of the fusing portion (13), a first side of the fusing portion (13), a first side of the first connecting portion (11) and a first side of the second connecting portion (12) are located at the same level, and a second side of the fusing portion (13), a second side of the first connecting portion (11) and a second side of the second connecting portion (12) define a concave portion,
preferably further comprising a first magnetism member and a second magnetism member respectively disposed at two opposite outer surfaces of the protective component (20) in a thickness direction of the fusing portion (13),
wherein the fusing portion (13) is disposed between the first magnetism member and the second magnetism member, and a polarity of a surface of the first magnetism member facing the fusing portion (13) and a polarity of a surface of the second magnetism member facing the fusing portion (13) are opposite to each other.

4. The battery connector (1) of claim 2, wherein the fusing portion (13) has at least one through-hole (131) formed therein.

5. The battery connector (1) of claim 1, wherein the first shell (21) includes a first protrusion and a first slot formed on a first joint surface thereof fitted with the second shell (22), the second shell (22) includes a second slot (222) and a second protrusion (223) formed on a second joint surface (221) thereof fitted with the first shell (21), and
wherein the first slot is fitted with the second protrusion (223), and the first protrusion is fitted with the second slot (222),
wherein the first slot and the first protrusion are preferably respectively disposed at two sides of the first joint surface in a width direction of the first joint surface, the second protrusion (223) and the second slot (222) are preferably respectively disposed at two sides of the second joint surface (221) in a width direction of the second joint surface (221); and
wherein a first relief groove (214) is preferably disposed at each side of the first joint surface in a length direction of the first joint surface, and a second relief (224) groove is preferably disposed at each side of the second joint surface (221) in a length direction of the second joint surface (221), the first relief groove (214) and the second relief groove (224) are preferably fitted with each other to allow the first connecting portion (11) and the second connecting portion (12) to pass therethrough.

6. The battery connector (1) of claim 1, wherein the first shell (21) and the second shell (22) are welded together via a brazing layer disposed on at least one thereof, so as to define the protective chamber (24).

7. The battery connector (1) of claim 1, wherein a gas inlet communicated with the protective chamber (24) is formed in the first shell (21) or the second shell (22), wherein a duct is preferably inserted in the gas inlet.

8. The battery connector (1) of any one of claims 1-7, wherein the first shell (21) and the second shell (22) are made of insulating, anti-flame and high-temperature resistant non-metal materials, wherein the first shell (21) and the second shell (22) are preferably made of ceramic.

9. The battery connector (1) of any one of claims 1-8, wherein the first connecting portion (11), the second connecting portion (12) and the fusing portion (13) are integrally molded and/or made of metal materials.

10. The battery connector (1) of any one of claims 1-9, wherein the protective component (20) is connected to parts of the connecting sheet (10) adjacent to two ends of the fusing portion (13) respectively, wherein a surface of the protective component (20) fitted with the connecting sheet (10) is preferably configured as a metalized surface, and the metalized surface is fixed to the connecting sheet (10) via welding.

11. A battery module, comprising a battery connector (1) of any one of claims 1-10.

12. An electric vehicle, comprising a battery connector (1) of any one of claims 1-10.

## Patentansprüche

1. Batterieanschluss (1) für ein Elektrofahrzeug, umfassend:
ein Anschlussblech (10), das einen Sicherungsabschnitt (13) aufweist; und
eine Schutzkomponente (20), in die der Sicherungsabschnitt (13) eingeschlossen ist,
wobei eine Querschnittsfläche des Sicherungsabschnitts (13) geringer als eine Querschnittsfläche eines restlichen Teils des Anschlussblechs (10) ist,
wobei das Anschlussblech (10) einen ersten Anschlussabschnitt (11) und einen zweiten Anschlussabschnitt (12) umfasst und der Sicherungsabschnitt (13) zwischen dem ersten Anschlussabschnitt (11) und dem zweiten Anschlussabschnitt (12) angeordnet ist,
wobei die Schutzkomponente (20) eine erste Hülse (21) und eine zweite Hülse (22) beinhaltet, die erste Hülse (21) und die zweite Hülse (22) eine abgedichtete Schutzkammer (24) zwischen denselben definieren und der Sicherungsabschnitt (13) in der Schutzkammer (24) angeordnet ist, wobei die erste Hülse (21) und die zweite Hülse (22) vorzugsweise über eine Schnappverbindung miteinander verbunden sind,
**dadurch gekennzeichnet, dass** die Schutzkammer (24) mit Wasserstoff gefüllt ist.

2. Batterieanschluss (1) nach Anspruch 1, wobei eine Breite des Sicherungsabschnitts (13) geringer als eine Breite des ersten Anschlussabschnitts (11) und eine Breite des zweiten Anschlussabschnitts (12) ist.

3. Batterieanschluss (1) nach Anspruch 2, wobei in einer Breitenrichtung des Sicherungsabschnitts (13) eine erste Seite des Sicherungsabschnitts (13), eine erste Seite des ersten Anschlussabschnitts (11) und eine erste Seite des zweiten Anschlussabschnitts (12) sich auf demselben Niveau befinden und eine zweite Seite des Sicherungsabschnitts (13), eine zweite Seite des ersten Anschlussabschnitts (11) und eine zweiten Seite des zweiten Anschlussabschnitts (12) einen konkaven Abschnitt definieren,
der vorzugsweise weiter ein erstes Magnetismuselement und ein zweites Magnetismuselement umfasst, die jeweils an zwei einander gegenüberliegenden Außenflächen der Schutzkomponente (20) in einer Dickenrichtung des Sicherungsabschnitts (13) angeordnet sind,
wobei der Sicherungsabschnitt (13) zwischen dem ersten Magnetismuselement und dem zweiten Magnetismuselement angeordnet ist und eine Polarität einer dem Sicherungsabschnitt (13) zugewandten Fläche des ersten Magnetismuselements und eine Polarität einer dem Sicherungsabschnitt (13) zugewandten Fläche des zweiten Magnetismuselements einander gegenüber liegen.

4. Batterieanschluss (1) nach Anspruch 2, wobei der Sicherungsabschnitt (13) zumindest eine darin ausgebildete Durchgangsbohrung (131) aufweist.

5. Batterieanschluss (1) nach Anspruch 1, wobei die erste Hülse (21) einen ersten Vorsprung und einen ersten Schlitz beinhaltet, die auf einer mit der zweiten Hülse (22) zusammengefügten ersten Anlagefläche derselben ausgebildet sind, die zweite Hülse (22) einen zweiten Schlitz (222) und einen zweiten Vorsprung (223) beinhaltet, die auf einer mit der ersten Hülse (21) zusammengefügten zweiten Anlagefläche (221) derselben ausgebildet sind, und
wobei der erste Schlitz mit dem zweiten Vorsprung (223) zusammengefügt ist und der erste Vorsprung mit dem zweiten Schlitz (222) zusammengefügt ist,
wobei der erste Schlitz und der erste Vorsprung vorzugsweise jeweils an zwei Seiten der ersten Anlagefläche in einer Breitenrichtung der ersten Anlagefläche angeordnet sind, der zweite Vorsprung (223) und der zweite Schlitz (222) vorzugsweise jeweils an zwei Seiten der zweiten Anlagefläche (221) in einer Breitenrichtung der zweiten Anlagefläche (221) angeordnet sind; und
wobei eine erste Entlastungsnut (214) vorzugsweise an jeder Seite der ersten Anlagefläche in einer Längenrichtung der ersten Anlagefläche angeordnet ist und eine zweite Entlastungsnut (224) vorzugsweise an jeder Seite der zweiten Anlagefläche (221) in einer Längenrichtung der zweiten Anlagefläche (221) angeordnet ist, die erste Entlastungsnut (214) und die zweite Entlastungsnut (224) vorzugsweise zusammengefügt sind, um zu ermöglichen, dass der erste Anschlussabschnitt (11) und der zweite Anschlussabschnitt (12) durch diese hindurch treten.

6. Batterieanschluss (1) nach Anspruch 1, wobei die erste Hülse (21) und die zweite Hülse (22) über eine Lötschicht, die auf zumindest einer derselben angeordnet ist, zusammengeschweißt sind, um die Schutzkammer (24) zu definieren.

7. Batterieanschluss (1) nach Anspruch 1, wobei ein Gaseinlass, der kommunizierend mit der Schutzkammer (24) verbunden ist, in der ersten Hülse (21) oder der zweiten Hülse (22) ausgebildet ist, wobei vorzugsweise eine Rohrleitung in den Gaseinlass eingesetzt ist.

8. Batterieanschluss (1) nach einem der Ansprüche 1-7, wobei die erste Hülse (21) und die zweite Hülse (22) aus isolierenden, flammensicheren und hochtemperaturfesten nicht-metallenen Materialien bestehen, wobei die erste Hülse (21) und die zweite Hülse (22) vorzugsweise aus Keramik bestehen.

9. Batterieanschluss (1) nach einem der Ansprüche 1-8, wobei der erste Anschlussabschnitt (11), der zweite Anschlussabschnitt (12) und der Sicherungsabschnitt (13) einstückig geformt sind und/oder aus Metallmaterialien bestehen.

10. Batterieanschluss (1) nach einem der Ansprüche 1-9, wobei die Schutzkomponente (20) mit jeweils an zwei Enden des Sicherungsabschnitts (13) angrenzenden Teilen des Anschlussblechs (10) verbunden ist, wobei eine Fläche der Schutzkomponente (20), die mit dem Anschlussblech (10) zusammengefügt ist, vorzugsweise als eine metallisierte Fläche konfiguriert ist und die metallisierte Fläche mittels Schweißen an dem Anschlussblech (10) befestigt ist.

11. Batteriemodul, das einen Batterieanschluss (1) nach einem der Ansprüche 1-10 umfasst.

12. Elektrofahrzeug, das einen Batterieanschluss (1) nach einem der Ansprüche 1-10 umfasst.

## Revendications

1. Connecteur de batterie (1) pour un véhicule électrique, comprenant :
une feuille de connexion (10) ayant une partie de fusion (13) ; et
un composant de protection (20) dans lequel la partie de fusion (13) est enfermée,
dans lequel une section transversale de la partie de fusion (13) est inférieure à une section transversale de la partie restante de la feuille de connexion (10),
dans lequel la feuille de connexion (10) comprend une première partie de connexion (11) et une seconde partie de connexion (12), et la partie de fusion (13) est disposée entre la première partie de connexion (11) et la seconde partie de connexion (12),
dans lequel le composant de protection (20) inclut une première coque (21) et une seconde coque (22), la première coque (21) et la seconde coque (22) définissent une chambre de protection hermétique (24) entre elles, et la partie de fusion (13) est disposée dans la chambre de protection (24), dans lequel la première coque (21) et la seconde coque (22) sont de préférence reliées l'une à l'autre par encliquetage,
**caractérisé en ce que** la chambre de protection (24) est remplie d'hydrogène.

2. Connecteur de batterie (1) selon la revendication 1, dans lequel une largeur de la partie de fusion (13) est inférieure à une largeur de la première partie de connexion (11) et à une largeur de la seconde partie de connexion (12).

3. Connecteur de batterie (1) selon la revendication 2, dans lequel dans une direction de largeur de la partie de fusion (13), un premier côté de la partie de fusion (13), un premier côté de la première partie de connexion (11) et un premier côté de la seconde partie de connexion (12) sont situés au même niveau, et un second côté de la partie de fusion (13), un second côté de la première partie de connexion (11) et un second côté de la seconde partie de connexion (12) définissent une partie concave,
comprenant de préférence en outre un premier élément de magnétisme et un second élément de magnétisme respectivement disposés au niveau de deux surfaces extérieures opposées du composant de protection (20) dans une direction d'épaisseur de la partie de fusion (13),
dans lequel la partie de fusion (13) est disposée entre le premier élément de magnétisme et le second élément de magnétisme, et une polarité d'une surface du premier élément de magnétisme tournée vers la partie de fusion (13) et une polarité d'une surface du second élément de magnétisme tournée vers la partie de fusion (13) sont opposées l'une à l'autre.

4. Connecteur de batterie (1) selon la revendication 2, dans lequel la partie de fusion (13) possède au moins un trou traversant (131) formé dans celle-ci.

5. Connecteur de batterie (1) selon la revendication 1, dans lequel la première coque (21) inclut une première saillie et une première fente formées sur une première surface de jonction de celle-ci couplée à la seconde coque (22), la seconde coque (22) inclut une seconde fente (222) et une seconde saillie (223) formées sur une seconde surface de jonction (221) de celle-ci couplée à la première coque (21), et
dans lequel la première fente est couplée à la seconde saillie (223) et la première saillie est couplée à la seconde fente (222),
dans lequel la première fente et la première saillie sont de préférence disposées respectivement sur deux côtés de la première surface de jonction dans une direction de largeur de la première surface de jonction, la seconde saillie (223) et la seconde fente (222) sont de préférence disposées respectivement sur deux côtés de la seconde surface de jonction (221) dans une direction de largeur de la seconde surface de jonction (221) ; et
dans lequel une première rainure de dégagement (214) est de préférence disposée de chaque côté de la première surface de jonction dans une direction de longueur de la première surface de jonction, et une seconde rainure de dégagement (224) est de préférence disposée de chaque côté de la seconde surface de jonction (221) dans une direction de longueur de la seconde surface de jonction (221), la première rainure de dégagement (214) et la seconde rainure de dégagement (224) sont de préférence couplées l'une à l'autre pour permettre à la première partie de connexion (11) et à la seconde partie de connexion (12) de passer à travers.

6. Connecteur de batterie (1) selon la revendication 1, dans lequel la première coque (21) et la seconde coque (22) sont soudées ensemble à l'aide d'une couche de brasage disposée sur au moins l'une des deux, de façon à définir la chambre de protection (24).

7. Connecteur de batterie (1) selon la revendication 1, dans lequel une admission de gaz communiquant avec la chambre de protection (24) est formée dans la première coque (21) ou la seconde coque (22), dans lequel un conduit est de préférence inséré dans l'admission de gaz.

8. Connecteur de batterie (1) selon l'une quelconque des revendications 1 à 7, dans lequel la première coque (21) et la seconde coque (22) sont faites dans des matériaux non métalliques résistants aux températures élevées, ignifuges et isolants, dans lequel la première coque (21) et la seconde coque (22) sont de préférence faites en céramique.

9. Connecteur de batterie (1) selon l'une quelconque des revendications 1 à 8, dans lequel la première partie de connexion (11), la seconde partie de connexion (12) et la partie de fusion (13) sont moulées d'un seul tenant et/ou faites de matériaux métalliques.

10. Connecteur de batterie (1) selon l'une quelconque des revendications 1 à 9, dans lequel le composant de protection (20) est relié à des parties de la feuille de connexion (10) adjacentes à deux extrémités de la partie de fusion (13), respectivement, dans lequel une surface du composant de protection (20) couplé à la feuille de connexion (10) est de préférence configurée comme une surface métallisée, et la surface métallisée est fixée à la feuille de connexion (10) par soudage.

11. Module de batterie, comprenant un connecteur de batterie (1) selon l'une quelconque des revendications 1 à 10.

12. Véhicule électrique, comprenant un connecteur de batterie (1) selon l'une quelconque des revendications 1 à 10.
